# EUROPEAN PATENT APPLICATION

(11) **EP 1 650 902 A1**
(43) Date of publication of application: **26.04.2006**
(21) Application number: 05022782.6
(22) Date of filing: 19.10.2005
(51) Int. Cl.: H04L 12/28

(54) **Method and system for transmitting information in a wireless communication system comprising a main access point and a sub access point**

(30) Priority: 20.10.2004 KR 2004084152
(71) Applicant: Samsung Electronics Co., Ltd., Suwon-si, Gyeonggi-Do (KR)
(72) Inventor: Kwack, Hyun Sun, Seoul (KR)
(74) Representative: Lang, Johannes

(57) **Abstract**

In a method and system for transmitting traffic in a communication system having a main access point and a sub-access point, a determination is made as to whether simultaneous transmission by the main access point and the sub-access point is possible without causing an error during a transmission period of the main access point. When it is determined that simultaneous transmission is possible, synchronization is performed with respect to transmission time points of the main access point and the sub-access point, and respective traffic is simultaneously transmitted, at the main access point and the sub-access point, to wireless stations included in respective coverage areas during the traffic transmission period of the main access point. Thus, the present invention solves transmission delay problems and improves the transmission efficiency of the overall system which would otherwise be degraded due to relay of traffic via the sub-access point. In addition, the present invention prevents a bottleneck phenomenon which would otherwise occur due to concentration of traffic at the sub-access point as the number of the wireless stations positioned in the coverage area of the sub-access point increases.

## Description

### BACKGROUND OF THE INVENTION

### Technical Field

The present invention relates to a method and system for transmitting traffic in a communication system and, more particularly, to a method for effectively transmitting traffic in a communication system (e.g., wireless distribution system) including a main access point and a sub-access point.

### Related Art

In general, a wireless communication system provides a wireless communication service via an access point (hereinafter, referred to as 'AP') connected to a network.

In such a system, an access point is provided to serve the wireless stations located within a given coverage area, but certain stations located outside the given coverage area and other stations blocked or obstructed from communicating with the access point cannot be served.

In an attempt to solve the latter problem, a wireless distribution system involving the use of sub-access points to relay traffic from stations outside the coverage area of an access point and from blocked or obstructed stations, and vice-versa, could be provided. However, such a wireless distribution system has problems of inefficiency due to the fact that it operates based on a channel contention scheme wherein transmissions can take place only when a channel is idle. In addition, there are transmission delays in such a system due to the fact that traffic between a remote or blocked/obstructed station and an access point must be routed through a sub-access point, thereby involving two separate transmission operations carried out only after respective "channel idle or busy" determinations are carried out.

Thus, there is a need for the development of a method and system for transmitting traffic in a communication system in such a manner as to overcome or avoid the aforementioned problems.

The following patents are considered to be generally pertinent to the present invention, but are burdened by the disadvantages set forth above: U.S. Patent No. 6,768,722 to Katseff *et al.,* entitled *SYSTEMS AND METHODS FOR MANAGING MULTIPLE COMMUNICATIONS,* issued on July 27, 2004; U.S. Patent No. 6,640,108 to *Lu et al.,* entitled *CELLULAR COMMUNICATION SYSTEM,* issued on October 28, 2003; U.S. Patent No. 6,366,585 to Dapper *et al.,* entitled *DISTRIBUTED CONTROL IN A COMMUNICATION SYSTEM,* issued on April 2, 2002; U.S. Patent No. 6,144,653 to *Persson et al.,* entitled *METHOD FOR COMMUNICATING IN A WIRELESS COMMUNICATION SYSTEM,* issued on November 7, 2000; U.S. Patent No. 6,094,575 to Ander*son et al.,* entitled *COMMUNICATION SYSTEM AND METHOD,* issued on July 25, 2000; U.S. Patent No. 5,721,733 to *Wang et al.,* entitled *WIRELESS NETWORK ACCESS SCHEME,* issued on February 24, 1998; U.S. Patent No. 5,710,798 to Compana Jr., entitled *SYSTEM FOR WIRELESS TRANSMISSION AND RECEIVING OF INFORMATION AND METHOD OF OPERATION THEREOF,* issued on January 20, 1998; U.S. Patent No. 5,603,081 to Raith *et al.,* entitled *METHOD FOR COMMUNICATING IN A WIRELESS COMMUNICATION SYSTEM,* issued on February 11, 1997; and U.S. Patent No. 5,159,596 to Itoh, entitled *MOBILE COMMUNICATION SYSTEM,* issued on October 27, 1992.

### SUMMARY OF THE INVENTION

The present invention has been developed in order to solve the aforementioned problems. The present invention provides a method and system for transmitting traffic, which method and system are capable of enhancing traffic transmission efficiency in a communication system comprising a main access point and a sub-access point.

Furthermore, the present invention provides a method and system for transmitting traffic, which method and system are capable of reducing traffic transmission delay in a communication system comprising a main access point and a sub-access point.

In addition, the present invention provides a method and system for transmitting traffic, which method and system are capable of preventing a bottleneck phenomenon from occurring as traffic is concentrated on a sub-access point in a communication system having a main access point and a sub-access point.

In one aspect of the present invention, there is provided a method for transmitting traffic in a communication system having a main access point connected to a network and communicating with wireless stations positioned in a given coverage area, and a sub-access point for communicating with the wireless stations and relaying traffic to the main access point, the method including the steps of: determining whether simultaneous transmission by the main access point and the sub-access point is possible without causing an error during a transmission period of the main access point; when it is determined that the simultaneous transmission is possible, performing synchronization with respect to transmission time points of the main access point and the sub-access point; and simultaneously transmitting, by means of the main access point and the sub-access point, traffic to wireless stations included in the respective coverage areas during the traffic transmission period of the main access point.

In another aspect of the present invention, there is provided a communication system having a main access point connected to a network and communicating with wireless stations positioned in a given area, and a sub-access point communicating with the wireless stations and relaying traffic to the main access point, in which system the main access point periodically delivers to the sub-access point traffic transmission information relating to a next period, and the sub-access point determines, based on the traffic transmission information from the main access point, whether simultaneous traffic transmission with the main access point is possible without causing an error during a transmission period of the main access point. Then, when simultaneous transmission is possible, the sub-access point transmits traffic waiting for transmission during the transmission period of the main access point.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. I is a diagram of the configuration of a wireless communication system;
FIG. 2 is a diagram of the a configuration of a wireless distribution system;
FIG. 3 is a flowchart illustrating a method of transmitting traffic in the wireless distribution system of FIG. 2;
FIG. 4 is a diagram of a wireless distribution system according to an embodiment of the present invention;
FIG. 5 is a flowchart of a method for transmitting traffic in a wireless distribution system according to an embodiment of the present invention;
FIG. 6 is a diagram of an exemplary data format for traffic transmission information transferred from a main access point to a sub-access point according to an embodiment of the present invention;
FIG. 7 is a flowchart of a process performed at a sub-access point for traffic transmission in a wireless distribution system according to an embodiment of the present invention; and
FIGS. 8A and 8B are diagrams used to explain the method of transmitting traffic in a wireless distribution system according to an embodiment of the present invention.

### DETAILED DESCRIPTION OF THE PREFERED EMBODIMENTS

Hereinafter, the configuration and operation of embodiments of the present invention will be described in more detail with reference to the accompanying drawings. It should be noted that, when description of known functionality or configuration would obscure the nature of the present invention or impede understanding thereof, it will be omitted.

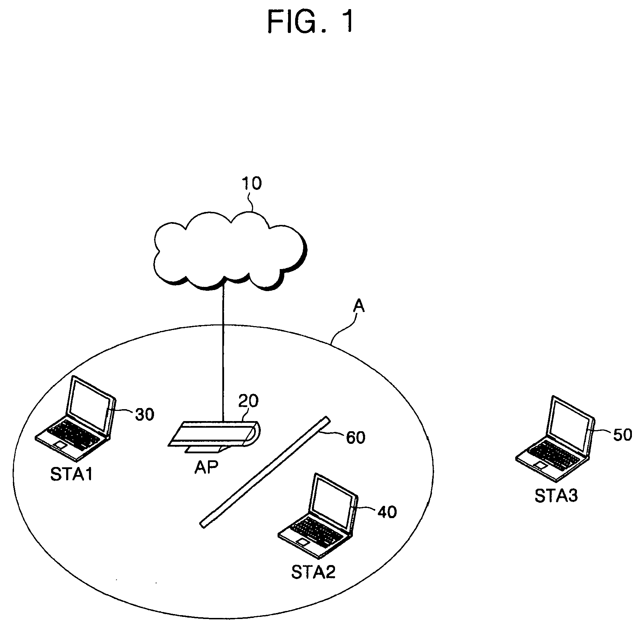

FIG. 1 is a diagram of the configuration of a wireless communication system. Referring to FIG. 1, the wireless communication system includes an access point 20 connected to a network 10 to serve a given area A, and a number of wireless stations (hereinafter, referred to as `STAs') (STA1, STA2 and STA3) 30, 40 and 50 that should be connected to the network 10 via the AP 20.

When the wireless stations (STA1, STA2 and STA3) 30, 40 and 50 are positioned as illustrated in FIG. 1, the STA1 30 can be connected to the network 10 via the AP 20. On the other hand, since the STA2 40 is positioned in a shadow area due to the presence of an obstacle 60 and the STA3 50 is positioned outside the coverage area A of the AP 20, the STA2 40 and STA3 350 cannot communicate with the AP 20, and therefore they cannot connect with the network 10.

Thus, a system having an auxiliary device has been proposed, in which system the auxiliary device relays traffic with the access point to wireless stations positioned in the shadow area or in an area outside the coverage area. Such a system is called a wireless distribution system (hereinafter, referred to as `WDS').

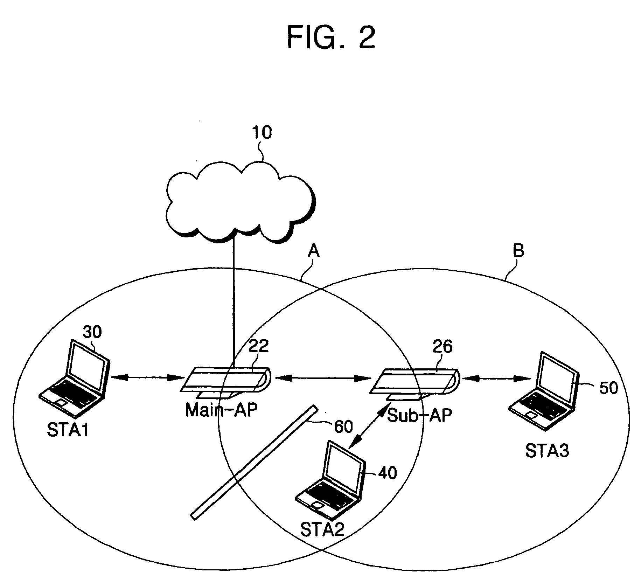

FIG. 2 is a diagram of the a configuration of a wireless distribution system. Referring to FIG. 2, the wireless distribution system (WDS) comprises a main access point 22, a sub-access point 26, and a number of wireless stations (STA1, STA2 and STA3) 30, 40 and 50.

The main access point 22 is connected to the network 10 so as to communicate with wireless stations (e.g., STA1 30) positioned in a given coverage area A.

The sub-access point 26 is connected to the main access point 22 so as to communicate with wireless stations positioned in a given coverage area B. In particular, the sub-access point 26 relays the traffic between the wireless stations positioned in an area where communication with the main access point 22 is not possible (e.g., 'a shadow area', an area outside the coverage area of the main access point 22, or the like) and the main access point 22. In FIG. 2, there is shown an exemplary case in which the STA2 40 is positioned in the shadow area where it is impossible for the STA2 40 to communicate with the main access point 22 due to the presence of the obstacle 60, and an exemplary case in which the STA3 50 is positioned in the area outside the coverage area A of the main access point 22. Accordingly, the coverage area B of the sub-access point 26 must include an area where the sub-access point 26 can relay traffic from the main access point 22 to the wireless stations (*e*.*g*., STA2 40 and STA3 50). In FIG. 2, the STA1 30 is in direct communication with the main access point 22, while the STA2 40 and the STA3 50 are in communication with the main access point 22 via the sub-access point 26. At this time, the sub-access point 26 relays traffic to the STA2 40 and the STA3 50.

Meanwhile, the main access point 22, the sub-access point 26 and the wireless stations 30, 40 and 50 access a channel using carrier sense multiple access/collision avoidance (CSMA/CA), which is an IEEE 802.11 based channel access scheme *(i. e.,* a contention based channel access scheme). That is, the main access point 22, the sub-access point 26 and the wireless stations 30, 40 and 50 perform carrier sensing prior to traffic transmission in order to first determine whether the channel is busy. When it is determined that the channel is idle, they transmit their own traffic. When it is determined that the channel is busy, they perform a back-off process to avoid collision. In the IEEE 802.11 1 scheme, an access point (AP) broadcasts a beacon frame in a certain period to notify wireless stations in a relevant area of network information.

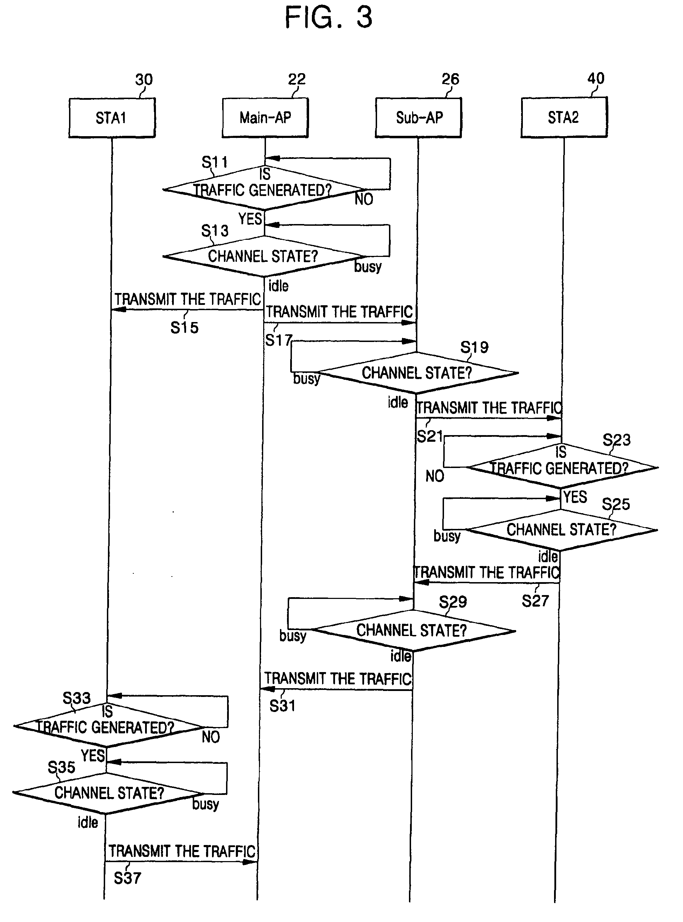

FIG. 3 is a flowchart illustrating a method of transmitting traffic in the wireless distribution system of FIG. 2. That is, FIG. 3 illustrates a process of transmitting traffic among the main access point 22, the sub-access point 26, the STA1 30 which is capable of directly communicating with the main access point 22, and the STA2 40 which communicates with the main access point 22 via the sub-access point 26, as shown in FIG. 2. Thus, the traffic transmission process will be described with reference to FIG. 2 and FIG. 3.

First, when traffic to be transmitted to the wireless stations (STA1 and STA2) 30 and 40 is generated at the main access point 22 (S11), the main access point 22 performs a channel state determination process (S 13) by carrier sensing to determine whether the channel is idle or busy. When it is determined that the channel is idle, the main access point 22 transmits the traffic to the STA1 30 (S 15) and to the sub-access point 26 (S17). In the process (S17), the sub-access point 26, which receives the traffic from the main access point 22, also performs a channel state determination process to determine whether the channel is idle or busy (S19). When it is determined that the channel is idle, the sub-access point 26 transmits the traffic received from the main access point 22 to the STA2 40 (S21).

Meanwhile, when traffic to be transmitted to the main access point 22 is generated at the STA2 40 (S23), the STA2 40 performs a channel state determination process to determine whether the channel is idle or busy (S25). When the channel is idle, the STA2 40 transmits the traffic to the sub-access point 26 (S27). The sub-access point 26, which receives the traffic, also performs a channel state determination process (S29) to determine whether the channel is idle or busy (S29). When the channel is idle, the sub-access point 26 transmits the relevant traffic to the main access point 22 (S31).

Furthermore, when traffic to be transmitted to the main access point 22 is generated at the STA1 30 (S33), the STA1 30 performs a channel state determination process to determine whether the channel is idle or busy (S35) and then transmits the traffic to main access point 22 when the channel is idle (S37).

As described above, all equipment determines whether the channel is busy prior to traffic transmission, and transmits the traffic only when the channel is idle. Thus, the channel is allocated to the respective equipment at different times for transmission of traffic, and this can degrade channel use efficiency.

In addition, a wireless station (e.g., STA2 40), which performs traffic transmission and reception with the main access point via the sub-access point, requires two or more transmissions for traffic transmission or reception. That is, the wireless station undergoes the traffic transmission process between the wireless station and the sub-access point and the traffic transmission process between the sub-access point and the main access point. Therefore, network processing efficiency (throughput) can also be degraded. In FIG. 3, the STA2 40 requires twice the bandwidth of the STA1 30, and this results in transmission delay.

Furthermore, traffic is concentrated on the sub-access point 26 as the number of wireless stations communicating with the main access point 22 via the sub-access point 26 increases, resulting in a bottleneck phenomenon.

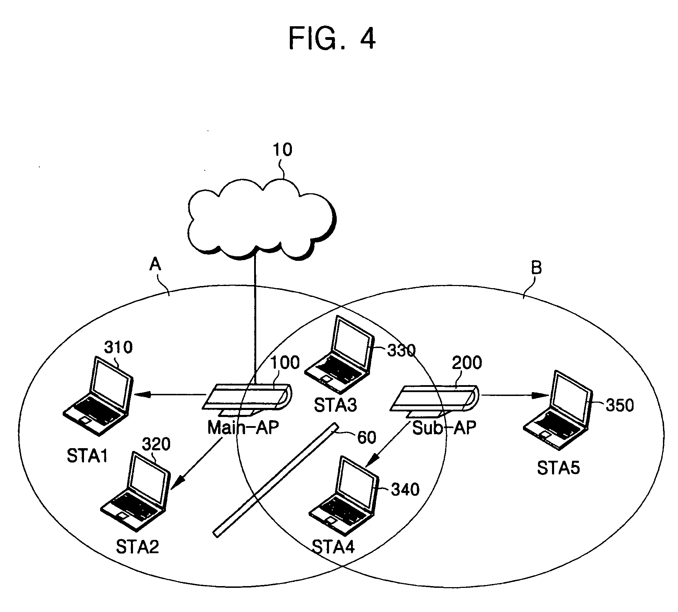

FIG. 4 is a diagram of a wireless distribution system according to an embodiment of the present invention.

Referring to FIG. 4, the wireless distribution system according to an embodiment of the present invention includes a main access point 100, a sub-access point 200, and a number of wireless stations (STA1, STA2, STA3, STA4 and STA5) 310, 320, 330, 340 and 350. The main access point 100 is connected to the network 10 and communicates with the wireless stations (e.g., STA1 310, STA2 320 and STA3 330) positioned in a given coverage area A.

Furthermore, the main access point 100 periodically delivers to the sub-access point 200 traffic transmission information for a next transmission period so that the sub-access point 200 simultaneously transmits its traffic in a transmission period of the main access point 100. That is, the main access point 100 periodically delivers to the sub-access point 200 the traffic transmission information (e.g., information as to transfer time and destination) for traffic which the main access point 100, occupying the channel, will transmit during the next transmission period. Therefore, it is preferable that the main access point 100 use a non-used area of a beacon frame periodically broadcasting to the sub-access point 200 to deliver network information. However, the present invention is not limited to loading and transmitting the traffic transmission information in the non-used area of the beacon frame. That is, the main access point 100 may produce separate transfer data for transmission of the traffic transmission information.

The sub-access point 200 is connected to the main access point 100 and communicates with wireless stations positioned in a given coverage area B. In particular, the sub-access point 200 relays traffic between wireless stations (e.g., the STA4 340 and STA5 350) positioned in an area where communication with the main access point 100 is impossible (*e*.*g*., 'a shadow area', an area outside the coverage area A of the main access point 100, or the like) and the main access point 100. In FIG. 4, there is shown an exemplary case in which the STA4 340 is positioned in a shadow area where communication with the main access point 100 is impossible due to the presence of an obstacle 60, and an exemplary case in which the STA5 350 is positioned in an area outside the coverage area A of the main access point 100.

When receiving traffic transmission information from the main access point 100, the sub-access point 200 determines, based on the traffic transmission information, whether the sub-access point 200 is allowed to transmit its traffic at the same time that the main access point 100 is occupying the channel. When it is determined that such transmission is possible, the sub-access point 200 transmits the traffic waiting for transmission in the sub-access 200 during a period when the main access point 100 is occupying the channel.

In the example of FIG. 4, arrows C thru F of an identical shape indicate an exemplary case in which the main access point 100 and the sub-access point 200 transmit traffic simultaneously. That is, when the main access point 100 transmits its traffic to the STA1 310, the sub-access point 200 transmits its traffic to the STA4 340 on a channel synchronized to the channel used by the main access point 100. Furthermore, when the main access point 100 transmits its traffic to the STA2 320, the sub-access point 200 transmits its traffic to the STA5 350 on a channel synchronized to the channel used by the main access point 100.

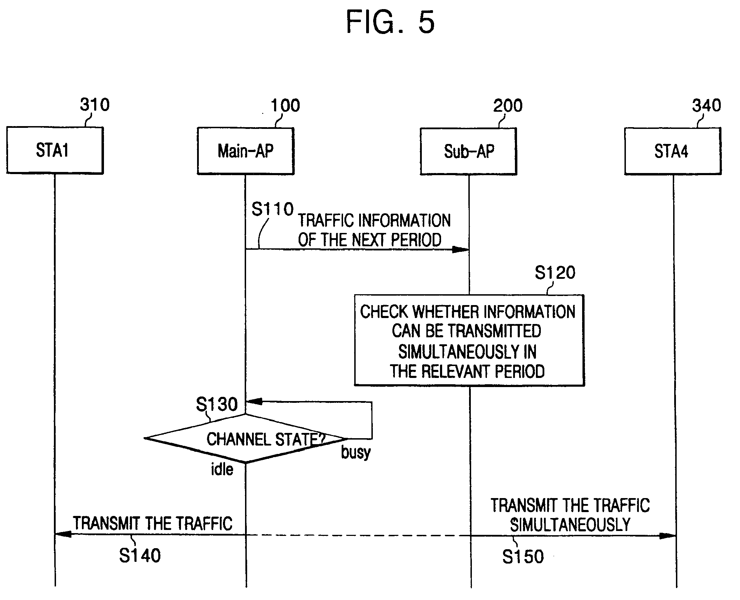

A process in which the sub-access point 200 also transmits traffic on a channel synchronized to the channel occupied by the main access point 100 will be described in more detail with reference to FIGS. 5 thru 7.

FIG. 5 is a flowchart of a method for transmitting traffic in a wireless distribution system according to an embodiment of the present invention. Referring to FIG. 4 and FIG. 5, the method for transmitting traffic in a wireless distribution system according to an embodiment of the present invention is as follows.

First, the main access point 100 transmits traffic transmission information for a next transmission period to the sub-access point 200 (S100). That is, the main access point 100 occupies the channel during the next period, and transmits to the sub-access point 200 information on traffic transmission *(e.g.,* information as to a transfer time and a destination). It is desirable that unicasting or broadcasting be used as the transmission method.

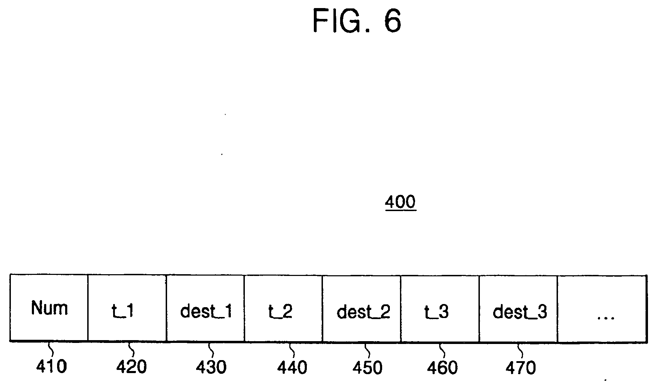

FIG. 6 is a diagram of an exemplary data format for traffic transmission information transferred from a main access point to a sub-access point according to an embodiment of the present invention.

Referring to FIG. 6, the transfer data 400 includes the number (Num) 410 of frames to be transmitted in a relevant period, information (t_1) 420, (t_2) 440, (t_3) 460, *etc.* as to the time when data of each frame are to be transmitted, and information (dest_1) 430, (dest_2) 450, (dest_3) 470, *etc.* as to a destination to which the data of each frame are to be transmitted. As mentioned in the description of FIG. 4, this traffic transmission information can be transmitted using a non-used area of the beacon frame, or using a new separate frame.

Referring back to FIG. 5, the main access point 100 will transmit a relevant frame in preference to other wireless stations based on the traffic transmission information for the relevant transmission period after transmitting the traffic transmission information in step S110. That is, the main access point 100 will use the channel exclusively based on the traffic transmission information.

Meanwhile, the sub-access point 200, which receives the traffic transmission information from the main access point 100 in step S110, determines whether information can be simultaneously transmitted without causing an error during the transmission period of the main access point 100 (S120). For example, based on received signal strength indications (hereinafter, RSSIs) of the wireless stations previously stored in the sub-access point 200, the sub-access point 200 determines whether there is a wireless station in which collision occurs when the sub-access point 200 transmits traffic during a transmission period for the main access point 100. That is, the sub-access point 200 determines whether there is a wireless station having high RSSI in the area of sub-access point 200 among the wireless stations that will receive traffic from the main access point 100 during the transmission period of the main access point 100. This is due to the fact that, in the case of a wireless station having high RSSI in the area of sub-access point 200 among the wireless stations that will receive traffic from the main access point 100 during the transmission period of the main access point 100, a reception error due to collision occurs when the sub-access point 200 transmits its traffic to an arbitrary wireless station during the transmission period of the main access point 100.

In the example of FIG. 4, the STA3 330 corresponds to the case where reception error due to collision occurs. Accordingly, the sub-access point 200 determines whether traffic transmission to the STA3 330 is being conducted during the transmission period of the main access point 100 so as to determine whether simultaneous transmission is possible. When traffic transmission to the STA3 330 is not made during the transmission period of the main access point 100, the sub-access point 200 determines that simultaneous transmission is possible. Otherwise, the sub-access point 200 determines that simultaneous transmission is not possible.

When it is determined, in step S120, that the simultaneous transmission is possible during the transmission period of main access point 100, the sub-access point 200 transmits its traffic waiting for transmission in the sub-access point 200 (S150) at the same time that the main access point 100 transmits its traffic (S140).

In the latter regard, the main access point 100 performs a process of confirming the channel state prior to transmitting its traffic (S130) and, when the channel is idle, main access point 100 transmits its traffic.

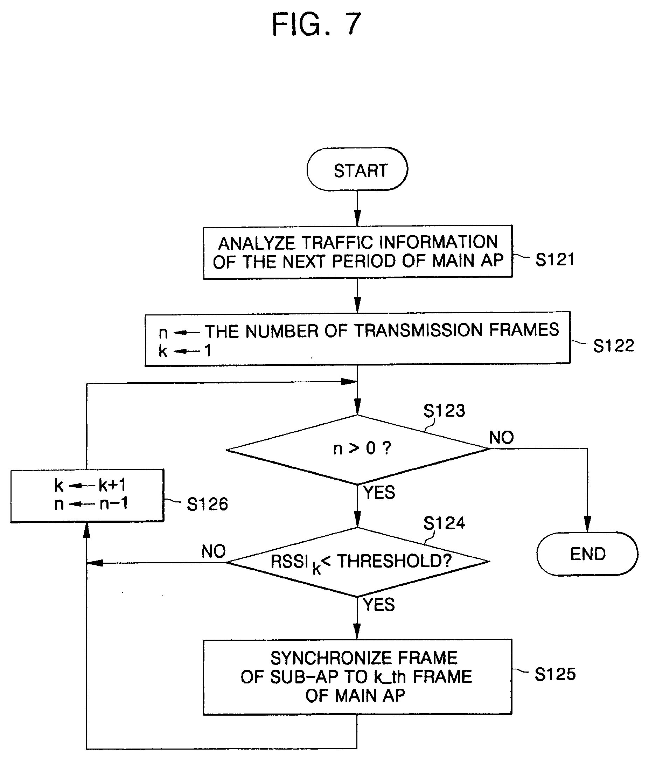

FIG. 7 is a flowchart of a process performed at a sub-access point for traffic transmission in a wireless distribution system according to an embodiment of the present invention.

Referring to FIG. 4 and FIG. 7, the sub-access point 200 performs the following steps for traffic transmission in the wireless distribution system according to an embodiment of the present invention.

First, the sub-access point 200 must store the most recent RSSIs, which are received from wireless stations positioned in the coverage area B of the sub-access point (not shown in FIG. 7).

After receiving traffic information for the next transmission period from the main access point 100, the sub-access point 200 analyzes the traffic information (S121). That is, the sub-access point 200 identifies wireless stations that will receive the traffic during the next period, and the number of such wireless stations, and confirms information as to a time when the wireless stations will receive the traffic.

When it is analyzed that there is a wireless station having RSSI in the area of sub-access point 200 less than a predetermined threshold value among all the wireless stations that will receive traffic from the main access point 100 in a subsequent transmission period, the sub-access point 200 performs a synchronization process for simultaneous transmission of its traffic waiting for transmission in the sub-access point 200 at a point in time when the traffic to the wireless station (S122 to S126) is transmitted. That is, the sub-access point 200 determines whether the received signal strength indication of each wireless station is larger than the threshold value while counting the number of wireless stations, based on the number of all the wireless stations (*i.e*., the number of transmission frames of the main access point 100) that will receive traffic from the main access point 100 in the next transmission period. Therefore, the sub-access point 200 initializes 'n' to the number of transmission frames and 'k' to '1' (S122). In the latter regard, 'k' is a variable identifying a wireless station that receives an 'n-th' frame that the main access point 100 transmits and a received signal strength from a relevant wireless station.

The sub-access point 200 compares RSSIk from the wireless station that receives the 'k-th' frame to the threshold value while decrementing the 'n' value by '1' and incrementing the 'k' value by '1' until the 'n' value reaches '0' (S123), and performs synchronization for transmission of the traffic at a point in time when the traffic to a wireless station having an RSSI value smaller than the threshold value is transmitted (S124 to S126). For example, when the RSSI of a 'k'th wireless station is smaller than the threshold value (S125), the sub-access point 200 synchronizes the frame of the sub-access point 200 to the 'k-th' frame of the main access point 100 (S125), and then increments 'k' by '1' and decrements 'n' by '1' before returning to step S123.

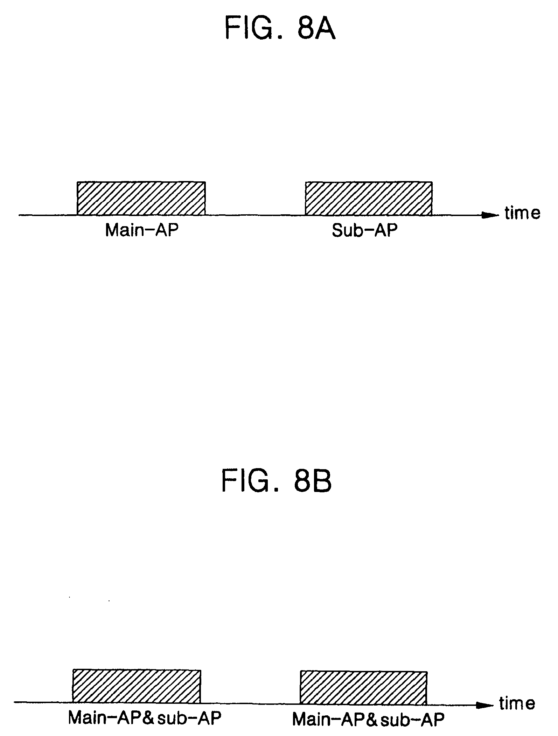

FIGS. 8A and 8B are diagrams used to explain the method of transmitting traffic in a wireless distribution system according to an embodiment of the present invention.

Specifically, FIG. 8A illustrates an example of a method for transmitting traffic in a wireless distribution system according to a previous embodiment, and

FIG. 8B illustrates an example of a method for transmitting traffic in a wireless distribution system according to an embodiment of the present invention. In FIGS. 8A and 8B, portions denoted by blocks on a time axis indicate traffic transmission time points.

Referring to FIGS. 4, 8A and 8B, in a previous embodiment, a main access point and a sub-access point transmit their traffic during different transmission periods while, in the present invention, the main access point 100 and the sub-access point 200 are allowed to transmit their traffic during the same transmission period. In other words, in the previous embodiment, either a main access point or a sub-access point is allowed to transmit traffic during a specific transmission period while, in the present invention, the main access point 100 and the sub-access point 200 are allowed to transmit traffic simultaneously during a specific transmission period. Thus, with the present invention, it is possible to enhance transmission efficiency (throughput) in the wireless distribution system.

As described above, the present invention can solve the problem of transmission delay and can improve the transmission efficiency of the overall system (which is otherwise degraded by relay of traffic via a sub-access point, compared to the case of direct communication with the main access point) by allowing the sub-access point 200 to transmit its traffic simultaneously during a transmission period of the main access point 100 in a communication system including the main access point 100 and the sub-access point 200. That is, the present invention reduces transmission delay via the sub-access point 200 due to the relay of traffic, and increases the transmission efficiency of the overall system.

Furthermore, it is possible to prevent a bottleneck phenomenon which would otherwise occur due to concentration of traffic at a sub-access point as the number of the wireless stations positioned in the coverage area of the sub-access point increases.

Although embodiments of the present invention have been described, several variations may be made to the present invention without departing from the scope of the present invention. Therefore, the scope of the present invention is not limited to the illustrated embodiments, and should be defined by the following claims as well as equivalents of the claimed subject matter. For example, although the wireless distribution system, including a main access point and a sub-access point, has been described in the detailed description of the present invention, the present invention is not limited to the wireless distribution system, and is applicable to all communication systems which include a main access point directly connected to a communication network, and a sub-access point that relays traffic to the main access point.

## Claims

1. A method for transmitting traffic in a communication system which includes a main access point connected to a network for communication with wireless stations positioned in a given coverage area, and a sub-access point for communicating with the wireless stations and for relaying traffic to the main access point, the method comprising the steps of:
determining whether simultaneous transmission by the main access point and the sub-access point is possible without causing an error during a transmission period of the main access point;
when it is determined that the simultaneous transmission is possible, performing synchronization with respect to transmission time points of the main access point and the sub-access point; and
simultaneously transmitting, by means of the main access point and the sub-access point, respective traffic to wireless stations included in the respective coverage areas of the main access point and the sub-access point during the transmission period of the main access point.

2. The system according to claim 1, wherein the determining step comprises:
storing, at the sub-access point, recent received signal strength indications of all wireless stations positioned in an area where communication with the sub-access point is possible;
transmitting, by means of the main access point, to the sub-access point traffic transmission information of a next transmission period; and
determining that the simultaneous transmission is possible when the received signal strength indications stored at the sub-access point are all less than a predetermined threshold value with respect to wireless stations that are to transmit the traffic during the transmission period of the main access point.

3. The method according to claim 2, wherein the traffic transmission information comprises:
a number of frames to be transmitted in a relevant period;
information as to a time when data of each frame is to be transmitted; and
information as to a destination to which the data of each frame is to be transmitted.

4. The method according to claim 2, wherein the traffic transmission information is contained and transmitted in a non-used area of a beacon frame which the main access point periodically broadcasts to deliver network information to the sub-access point.

5. The method according to claim 2, wherein the traffic transmission information is contained and transmitted in a separate data frame produced by the main access point.

6. The method according to claim 2, wherein the step of performing the synchronization comprises performing the synchronization so that traffic waiting for transmission at the sub-access point is transmitted at a point in time, during the transmission period of the main access point, of transmitting the traffic to a wireless station having a received signal strength indication, at the sub-access point, which is less than a threshold value among wireless stations that will transmit the traffic.

7. A method of transmitting traffic in a communication system having a main access point connected to a network and communicating with wireless stations positioned in a given coverage area, and a sub-access point for communicating with the wireless stations and for relaying traffic to the main access point, the method comprising the steps of:
storing, at the sub-access point, recent received signal strength indications of all wireless stations positioned in a coverage area where communication with the sub-access point is possible;
delivering traffic transmission information to the sub-access point when the main access point intends to transmit traffic to a first wireless station during a next transmission period;
comparing, by means of the sub-access point, the recent received signal strength indication of the first wireless station, stored in the storing step, to a predetermined threshold value; and
when the recent received signal strength indication of the first wireless station is less than the predetermined threshold value, transmitting, by means of the sub-access point, traffic waiting for transmission at the sub-access point to the wireless stations other than the first wireless station during the next transmission period of the main access point, simultaneously with transmission by the main access point.

8. A communication system, comprising:
a main access point connected to a network and communicating with wireless stations positioned in a given coverage area; and
a sub-access point for communicating with the wireless stations, and
for relaying traffic to the main access point;
wherein the main access point periodically delivers traffic transmission information for a next transmission period to the sub-access point;
wherein the sub-access point determines, based on the traffic transmission information delivered by the main access point, whether simultaneous traffic transmission with the main access point is possible without causing an error during a transmission period of the main access point; and
wherein, when the simultaneous transmission is possible, the sub-access point transmits traffic waiting for transmission at the sub-access point during the transmission period of the main access point.

9. The communication system according to claim 8, wherein the traffic transmission information delivered by the main access point comprises a number of frames to be transmitted during a relevant period, information as to a time when data of each frame is to be transmitted, and information as to a destination to which the data of each frame is to be transmitted.

10. The communication system according to claim 9, wherein the main access point delivers the traffic transmission information using a non-used area of a beacon frame that the main access point periodically transmits to the sub-access point so as to deliver network information.

11. The communication system according to claim 9, wherein the main access point delivers the traffic transmission information using a separate data frame produced by the main access point.

12. The communication system according to claim 9, wherein the sub-access point stores recent received signal strength indications of all wireless stations positioned in an area where communication with the sub-access point is possible, and the sub-access point determines that the simultaneous transmission is possible when the stored recent received signal strength indication is less than a predetermined threshold value with respect to wireless stations indicated by the destination information in the received traffic transmission information.

13. An apparatus of transmitting traffic in a communication system which includes a main access point connected to a network and communicating with wireless stations positioned in a given coverage area, and a sub-access point for communicating with the wireless stations and for relaying traffic to the main access point, said apparatus comprising:
storing means located at the sub-access point for storing recent received signal strength indications of all wireless stations positioned in a coverage area where communication with the sub-access point is possible;
delivering means located at the main access point for delivering traffic transmission information to the sub-access point when the main access point intends to transmit traffic to a first wireless station during a next
transmission period;
comparing means located at the sub-access point for comparing the recent received signal strength indication of the first wireless station, as stored by the storing means, to a predetermined threshold value; and
transmitting means located at the sub-access point and responsive to the recent received signal strength indication of the first wireless station being less than the predetermined threshold value for transmitting traffic, waiting for transmission at the sub-access point, to the wireless stations other than the first wireless station during the next transmission period of the main access point and simultaneously with transmission by the main access point.
